# EUROPÄISCHE PATENTSCHRIFT

(11) **EP 0 577 140 B1**
(45) Veröffentlichungstag und Bekanntmachung des Hinweises auf die Patenterteilung: **02.10.1996**
(21) Anmeldenummer: 93110626.4
(22) Anmeldetag: 02.07.1993
(51) Int. Cl.: H02B 1/30

(54) **Schaltschrank**
Switch cabinet
Armoire de commutation

(30) Priorität: 02.07.1992 DE 4221754
(43) Veröffentlichungstag der Anmeldung: 05.01.1994
(73) Patentinhaber: Gawehn, Eberhard, D-90579 Langenzenn (DE)
(72) Erfinder: Gawehn, Eberhard, D-90579 Langenzenn (DE)
(74) Vertreter: Hansmann, Axel, Dipl.-Wirtsch.-Ing.

(56) Entgegenhaltungen:
- AU-B- 521 542
- DE-A- 1 440 151
- DE-A- 1 515 561
- DE-A- 2 921 361
- DE-A- 3 300 066
- DE-U- 1 640 884
- DE-U- 7 335 671
- DE-U- 8 807 511
- DE-U- 9 102 900
- GB-A- 767 294

## Beschreibung

Die Erfindung betrifft einen Schaltschrank, wie er als Einzelschrank oder auch als Anreihschrank in der Industrie zum Unterbringen von elektrischen Anlagen und deren Stromversorgungen vielfältig eingesetzt wird.

Solche Schaltschränke müssen in einer Reihe von Einzelpunkten immer wieder den Erfordernissen des Anwendungsfalles angepaßt werden und werden deshalb in der Regel nach einem Baukastenprinzip aus einer Vielzahl von Einzelteilen vom Hersteller oder auch vom Kunden selbst zusammengebaut. Dies gilt insbesondere beim Aneinanderreihen von mehreren Schränken zu einem Anreihschrank.

So ist beispielsweise von der Firma Sarel ein Reihenschaltschrank "E 1000" bekannt, der aus oberem und unterem, horizontal liegenden Kopfrahmen besteht, die über senkrecht verlaufende Einzelprofile an den senkrechten Kanten des Korpus miteinander verbunden werden. Dieser Korpus kann sowohl oben als auch unten sowie an den Seiten mit Wänden beplankt und auf der Vorder- und Rückseite mit Rückwänden bzw. Türen ausgestattet werden.

Weiterhin ist aus der DE-PS 39 39 421 der Firma Eldon ein Schaltschrank bekannt, bei dem dessen Rahmen aus einzelnen Hohlprofilen mit geschlossenem Querschnitt mittels Eckverbindungsteilen erstellt wird, der zu größeren Einheiten verbunden und auch beplankt werden kann.

Weiterhin ist aus der DE-PS 40 13 379 der FIrma Rittal ein Schaltschrank bekannt, bei dem der tragende Rahmen des Schaltschrankes aus einzelnen Hohlprofilen mit geschlossenem Querschnitt besteht, die untereinander sowie mit den Anbauteilen wie Beplankungen etc. wiederum über eine Vielzahl von speziellen Kleinteilen miteinander verbunden werden.

Weiterhin ist es aus der DE-PS 37 31 547 der Firma Rittal bekannt, einen einzelnen Schaltschrank aus zwei Seitenplatten, einem Boden und einem Deckel zu erstellen, die zwecks Erhöhung der Stabilität zusätzlich miteinander verschweißt werden. Die einzelnen Platten weisen dabei an den Kanten integrierte Profile mit geschlossenem Querschnitt auf. Ein derartiger Schrank kann nicht zu einem Anreihschrank ergänzt werden. Schließlich ist aus GB-A-767 294 ein Schrank gemäß dem Oberbegriff des Anspruchs 1 bekannt. Insgesamt weisen diese bekannten Lösungen verschiedene Nachteile auf:

Entweder das System erlaubt eine hohe Flexibilität, besteht jedoch gerade deswegen aus einer Vielzahl von miteinander zu verbindenden, untereinander meist verschiedenen, Einzelteilen. Dadurch ergibt sich automatisch eine hohe Montagezeit, und wenn eines der benötigten Spezialteile aus Versehen nicht vorhanden ist, gerät die Montage ganz ins Stocken. Bei der Vielzahl der notwendigen Einzelteile wird dies bei Lieferung meist nicht sofort überblickt.

Zusätzlich erhöht die Anzahl der Verbindungsstellen und damit auch die Anzahl der insgesamt verwendeten, nur verschraubten, Einzelteile auch die Schwierigkeit, eine ausreichende Stabilität des gesamten Schaltschrankes zu erzielen. Wenn dies durch zusätzliche Verschweissung erreicht werden muß, ist neben der eigentlichen Schweißarbeit noch weitaus höherer zusätzlicher Arbeitsaufwand für das Nachschleifen etc. notwendig, weswegen der Schweißaufwand möglichst gering gehalten werden soll.

Ein weiterer Nachteil der oben genannten Lösungen besteht auch darin, daß die dort verwendeten Profile Hohlprofile mit geschlossenem Querschnitt sind. Dadurch müssen spezielle Lackierverfahren angewandt werden, da beispielsweise das einfache, kostengünstige und umweltfreundliche Beschichten mittels Lackpulver bei geschlossenen Hohlräumen nicht möglich ist. Ein weiterer Nachteil besteht darin, daß vor alle beim Aneinanderreihen von mehreren Schaltschränken zu einem Anreihschrank das gewünschte Rastermaß, welches von einem Einzelschrank meist eingehalten wird, durch das Aneinanderreihen oft überschritten wird, indem zusätzliche Zwischenrahmen etc. verwendet werden müssen.

Es ist daher die Aufgabe gemäß der vorliegenden Erfindung, einen Schaltschrank zu schaffen, bei dem sowohl als Einzelschrank als auch als Anreihschrank ein gewünschtes Rastermaß eingehalten wird, der Schaltschrank aus möglichst wenigen, möglichst wenig unterschiedlichen und möglichst einfach miteinander zu verbindenden Einzelteilen zusammengestellt werden kann und der Schaltschrank eine optimale Stabilität besitzen soll. Die zu verwendenden Einzelteile sollen dabei möglichst einfach und mit geringem Arbeitsaufwand herzustellen und zu verbinden sein und als Kleinteile sollen möglichst viele Normteile Verwendung finden.

Diese Aufgabe wird bei einem gattungsgemäßen Schaltschrank durch die kennzeichnenden Merkmale des Anspruchs 1 gelöst. Vorteile Ausführungsformen ergeben sich aus den Unteransprüchen.

Um eine schnelle Montage und auch eine hohe Stabilität des Schaltschrankes zu gewährleisten, besteht der Korpus lediglich aus zwei Seitenteilen sowie Oberteil und Unterteil. Bei den Seitenteilen handelt es sich entweder um einen rechteckigen, im Inneren offenen Profilrahmen mit offener Profilform oder einer seitenabschlußwand mit gleichen Abmessungen und ebenfalls offener Profilform in der Falzung, je nachdem ob der Schrank weiter angereiht oder beendet werden soll.

Zwischen diese beiden Seitenelemente wird oben und unten eine identische, lediglich in anderer Position befestigte, Platte mit den Seitenelementen verschraubt.

Bei den Seitenelementen besteht der offene Profilrahmen aus einem nach innen offenen, umlaufenden U-Profil, und ist aus einem einzigen U-Profil hergestellt, also nur an einer Stelle des Rechteckes an der Außenfläche des Profilrahmens geschweißt. Dadurch ist nicht nur eine einfache und schnelle Herstellung sondern auch eine hohe Stabilität dieses Profilrahmens ohne Nacharbeiten gewährleistet. Die parallel abstrebenden Schenkel dieses U-Profiles des Profilrahmens sind auf Gehrung geschnitten und stoßen dementsprechend fast aneinander, wo sie ebenfalls zur Erhöhung der Stabilität, jedoch nicht auf der Außenfläche des Profilrahmens verschweißt werden.

Die Seitenabschlußwand besteht dabei aus einer Blechplatte, die an allen vier Kanten um 90° hochgefalzt und an den Vorder- und Hinterkanten zusätzlich nochmals um 90° nach innen gefalzt ist. Die hochgefalzten Kanten sind an den Ecken miteinander verschweißt.

In den einander zugewandten Flächen und bei den Profilrahmen sowie Seitenabschlußwänden vollständig umlaufend, sind Lochreihen in immer gleichem Abstand zueinander sowie gleichem Abstand zum Außenrand dieser Elemente angeordnet, die beim Zusammensetzen dieser Teile miteinander fluchten. Dabei ist der Abstand dieser Löcher zueinander so gewählt, daß eines der Löcher jeweils auf den Gehrungen, also in den Ecken, der einzelnen Elemente zu liegen kommt.

Aus nur vier Einzelteilen kann damit lediglich durch Verschrauben - je nach Stabilitätserfordernissen an beliebig vielen Stellen der Lochreihen - ein äußerst stabiler Korpus geschaffen werden. Dessen Stabilität rührt u.a. daher, daß in den vorderen und hinteren Stirnflächen der Horizontalplatten die Kröpfung dieser Horizontalplatten so hoch ist, daß sie nicht nur an einer, sondern an zwei nebeneinanderliegenden Löchern mit den senkrechten Seitenteilen verschraubt werden können. Wenn zusätzlich in den Zwischenraum zwischen die beiden Horizontalplatten und die Seitenelemente eine Rückwand nicht aufgesetzt, sondern eingesetzt wird, so hat dies den Vorteil, daß diese Rückwand nicht über die Außenkante des Korpus hinausragt und vor allem, daß diese dazwischengesetzte und ebenfalls verschraubte Rückwand die Stabilität des gesamten Schaltschrankes wesentlich positiver beeinflußt als eine von außen aufgesetzte Rückwand.

Dadurch, daß die seitlichen Elemente, also Profilrahmen oder Seitenabschlußwände, bis zur Oberkante des Korpus durchgehen, können in deren Oberseiten weitere Bohrungen zum Befestigen von Kran-Ösen vorgesehen werden, da dort die Belastungen durch das Eigengewicht des Schaltschrankes beim Anheben am besten aufgenommen werden können.

Beim Herstellen der Profilrahmen kommt die Gehrung in den Parallelschenkeln jeweils innerhalb eines Loches der Lochreihe zu liegen. Zur Stabilisierung der Rahmen nach Biegen des äußeren Querschenkels werden die aneinanderstoßenden Teile der Gehrung im Bereich zwischen dem Loch und dem inneren Freiraum des Profilrahmens entweder durch eine kurze Schweißnaht oder durch wenigstens zwei Schweißpunkte am Beginn und Ende dieses Bereiches miteinander verbunden.

Weiterhin sind in den nach vorne ragenden Flächen des Profilrahmens bzw. der Seitenabschlußwände mehrere Bohrungen zum Befestigen von Türscharnieren vorgesehen, die bei Nichtbedarf durch Kunststoffstöpsel verschlossen werden können.

Um eine ausreichende Dichtigkeit des Schaltschrankes zu gewährleisten, sind zwischen den Einzelteilen Dichtungen aus elastischem Material vorgesehen. Aufgrund der wenigen, in ihren Abmessungen immer gleichen Teile, kann hierfür ein einfaches, ebenfalls gelochtes, Kunststoffband oder auch eine umlaufende, vorgefertigte Dichtung verwendet werden, die einfach und kostengünstig zu beschaffen ist und keine spezielle Formung besitzen muß.

Die identischen oberen und unteren Horizontalplatten können - meist in der Mitte - eine Öffnung 14 aufweisen, die bei Verwendung als untere Horizontalplatte für den Kabeleinlaß dient oder bei Verwendung als obere Horizontalplatte als Entlüftungsöffnung. Bei Nichtbedarf kann diese Öffnung auch nachträglich durch eine Platte dicht verschlossen werden und zwar mittels einer dazwischen angeordneten Dichtung.

Die Abmessungen, des U-Profiles, aus welchem der Profilrahmen besteht, sind dabei so bemessen, daß in jedem der beiden parallel verlaufenden, gelochten Schenkel separate Verschraubungen vorgenommen werden können, ohne daß es zu Einbauschwierigkeiten bei der Verschraubung kommt.

Wenn ein solcher Korpus eines solchen Schaltschrankes mit Fronttüren ausgestattet werden soll, so liegt diese auf den Vorderflächen des Korpus teilweise auf.

Zu diesem Zweck besteht die Tür aus einer Blechwanne, die aus einer Blechplatte mit vier hochgebogenen Außenschenkeln, die untereinander miteinander verschweißt werden, besteht. Diese Wanne ist mit ihrem Innenraum gegen den Korpus gewandt als Türe montiert, wobei in diesem Innenraum im Abstand zum Außenschenkel umlaufend ein L-Profil, in der Regel angeschweißt, ist. Der parallel zum Außenschenkel der Wanne aufragende Schenkel dieses L-Profiles begrenzt einen Hohlraum, der zum Einsetzen der Dichtung dient. An den schloßseitigen, sowie der Ober- und Unterkante wird dieser Hohlraum 25 durch den Außenschenkel der Wanne begrenzt. Auf der Scharnierseite sitzt das L-Profil dagegen weiter innen, um in dem entstehenden Abstand zum Außenschenkel Platz für die Montage der Scharniere zu schaffen. Hier wird im Abstand zum L-Profil ein Z-Profil als Begrenzung für den Hohlraum der Dichtung montiert. Dabei befinden sich das L-Profil sowie das Z-Profil mit ihren parallel zur Wanne liegenden Schenkeln aufeinander und sind miteinander mit der Wanne verschweißt.

Auch auf der Scharnierseite kann - innerhalb des L-Profiles - ebenfalls ein Z-Profil an der Tür befestigt, um auf dieser Seite zwischen dem Z- und dem L-Profil ausreichend abgegrenzten Raum für die Montage des Türschlosses sowie des Schließgestänges zu schaffen. Sowohl das Z-Profil als auch das L-Profil ragen - im Gegensatz zur Dichtung - nicht aus dem Innenraum der Wanne der Tür hervor.

Ein besonders umbaufreundliches Schaltschranksystem mit besonders wenig verschiedenen Einzelteilen ergibt sich weiterhin dadurch, daß auch als seitlicher Abschluß eines einzelnen oder mehrteiligen Schaltschrankes nicht eine feste Seitenwand verwendet wird, sondern eine über die gesamte Seitenfläche zu öffnende Seitentür.

Hierfür ist es lediglich erforderlich, auf den als seitliches, stabilisierendes Element verwendeten Profilrahmen zunächst einen Blendrahmen aufzusetzen, in dem dieser, aus einem flachen Blechprofil bestehende Blendrahmen, der von außen nur entsprechend der Blechdicke dieses Blechprofiles sichtbar ist, einige Löcher aufweist, die mit den nach der Seite ragenden Lochreihen des Profilrahmens fluchten und hierüber leicht mit dem Profilrahmen verschraubt werden kann. Der Blendrahmen besitzt zwar die Außenabmessungen in etwa des offenen Profilrahmens, jedoch eine etwas kleinere innere Öffnung, so daß in dem Blendrahmen, jedoch innerhalb der freien inneren Öffnung des Profilrahmens liegend, die entsprechenden Ausnehmungen zum Befestigen von Türscharnieren angeordnet sind. Diese Ausnehmungen sind in beiden senkrechten Teilen des Blendrahmens eingearbeitet, so daß dieser spiegelbildlich ausgebildet ist und für beide Seitenabschlüsse eines Schaltschranken verwendbar ist.

Zusätzlich verbessert der Blendrahmen die optische Wirkung bei geöffneter Seitentür, da hierdurch die Lochreihen der Profilrahmen abgedeckt werden.

Über die Scharniere wird eine Seitentür am Blendrahmen und damit am Schaltschrank befestigt, wobei wiederum die gleiche Seitentür durch unterschiedliche Befestigung für beide Seitenabschlüsse eines Schaltschrankes verwendet werden kann.

Wenn zusätzlich die Tiefe des Schaltschrankes so gewählt ist, daß die für die Vorderfront verwendeten Türen auch auf die Seitenflächen von ihrer Dimensionierung her passen, ist nur eine einzige Sorte von Türen sowohl für die Vorderfront als auch beide Seitenabschlüsse des Schaltschrankes notwendig.

Dadurch ist bei geringstmöglicher Lagerhaltung auch durch den Anwender selbst jederzeit ein Umbau, eine Erweiterung oder eine Reduzierung des Schaltschrankes unter Nutzung der vorher beschriebenen Vorteile möglich.

Der Blendrahmen ist aus Gründen der Steifigkeit aus einem L-förmigen Profil hergestellt, dessen längerer Schenkel parallel zu den Außenflächen des Profilrahmens verläuft und auf diesem im montierten Zustand aufliegt, während der kürzere, stabilisierende Schenkel in den Bereich des Profilrahmens hineinragt und dadurch außer der Stabilisierung auch optisch die Scharnierbefestigung zwischen Blendrahmen und der Seitentür verbirgt.

Eine Ausführungsform gemäß der Erfindung ist im folgenden anhand der Figuren beispielhaft näher beschrieben. Es zeigen
- Fig. 1: einen Profilrahmen 1 in Seitenansicht,
- Fig. 2: eine geschnittene Darstellung durch einen Profilrahmen entlang der Linie II-II,
- Fig. 3: eine geschnittene Darstellung einer SeitenAbschlußwand 10 in gleicher Blickrichtung wie Fig. 2,
- Fig. 4: eine Frontansicht eines angereihten Schaltschrankes ohne Türen,
- Fig. 5: eine Schnittdarstellung durch den Schaltschrank der Fig. 4 in Blickrichtung V-V,
- Fig. 6: eine Schnittdarstellung durch den Schaltschrank in Richtung VI-VI und
- Fig. 7: eine teilweise Schnittdarstellung einer Tür in der Aufsicht.
- Fig. 8: eine Aufsicht auf einen Profilrahmen mit Blendrichtung in Blickrichtung von der Seite, analog Figur 5 und
- Fig. 9: eine Frontansicht eines Schaltschrankes ähnlich Figur 4 mit beidseitig angeordneten Seitentüren.

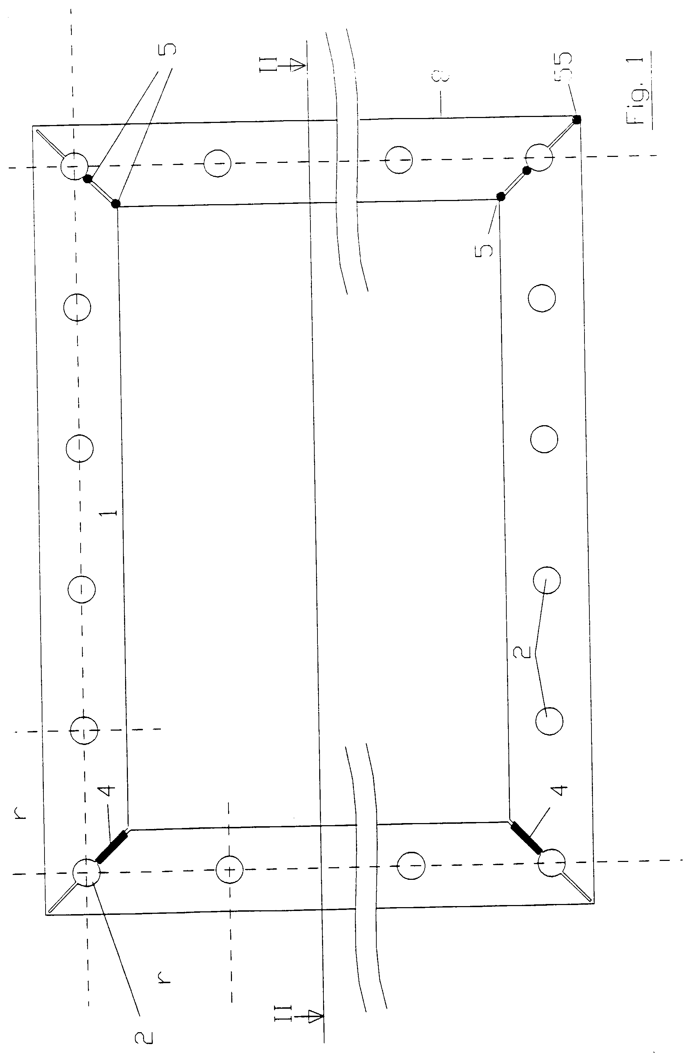

Fig. 1 zeigt einen Profilrahmen 1 in der Seitenansicht, wie er als senkrecht stehendes Seitenteil verwendet wird.

Dabei ist zu erkennen, daß der Profilrahmen 1 aus einem einzigen Stück eines U-Profiles 6 hergestellt ist, welches an den Enden in 45° abgeschrägt und an den beabsichtigten weiteren Knickstellen jeweils mit 90° ausgeklinkt wurde. Der durchgehend vorhandene Querschenkel 8 des U-Profiles, welches in der Fig. 1 die äußere Umfangsfläche darstellt, wird dann an den ausgeklinkten Stellen gebogen, so daß das abgeschrägte Ende mit dem abgeschrägten Anfang zusammentrifft und an der Außenkante mittels einer Schweißnaht 55 zu einem geschlossenen Profilrahmen verschweißt wird. Die Ausklinkungen und auch der Anfang und das Ende des U-Profiles sind dabei so zu wählen, daß die durchgehend im Abstand r in den Parallelschenkeln 7 vorhandenen Löcher 2 jeweils auf den Gehrungen des Profilrahmens 1 mit einem Loch 2 zu liegen kommen.

Dadurch besteht auch die Möglichkeit, die aneinanderstoßenden Gehrungen der Parallelschenkel 7 in den Ecken zu verschweißen, und zwar entweder wie in der linken Bildhälfte dargestellt, mittels einer Schweißnaht 4, die vom inneren Ende des Loches 2 bis zum inneren Ende der Parallelschenkel 7 reicht, oder durch zwei separate Schweißpunkte 5 am inneren Ende des gemeinsamen Loches 2 und am inneren gemeinsamen Ende der Parallelschenkel 7.

In beiden Fällen wird ein Einreißen dieser Schweißstellen durch das weiter außen angeordnete Loch 2 auf der Fuge verhindert, welches Kerbwirkungen vermeidet. Der weiter außenliegende Bereich der Fuge muß nicht unbedingt verschweißt werden, da der Stabilitätszuwachs hierdurch gering ist.

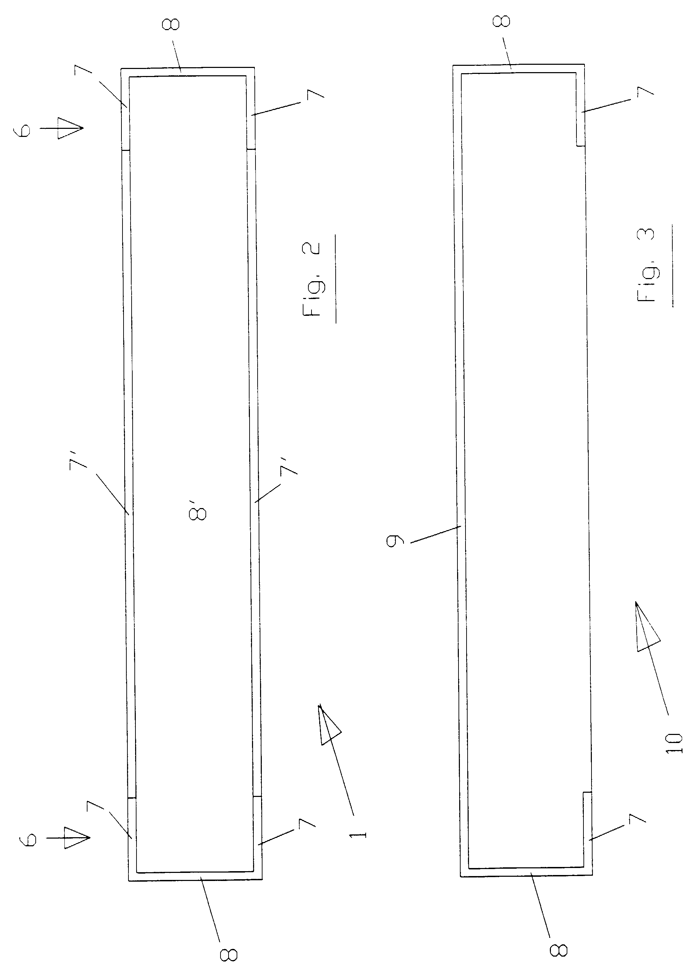

Wie der Schnittdarstellung der Fig. 2 des Profilrahmens 1 zu entnehmen, handelt es sich um ein U-Profil 6, dessen beiden Parallelschenkel 7 gleich lang sind und durch einen Querschenkel 8 verbunden sind. Diese Querschenkel 8, 8' bilden die Auußenflächen des späteren Profilrahmens 1.

Anstelle des Profilrahmens 1 wird als senkrechtes Element für den Schaltschrank auch die in den Außenabmessungen gleiche Seitenabschlußwand 10 verwendet, wenn die Schränke nicht weiter aneinandergereiht werden sollen. Eine solche Seitenabschlußwand 10 ist in Fig. 3 im Schnitt dargestellt. Diese ist aus einer Blechplatte mit entsprechend ausgeklinkten Eckbereichen durch zweimaliges Umbiegen der Ränder um 90° jeweils in die gleiche Richtung zu erzielen, wodurch ebenfalls ein außenliegender Querschenkel 8 sowie ein der Außenplatte 9 gegenüber und parallel liegender Paralleschenkel 7 entstehen. Parallelschenkel 7 und Querschenkel 8 besitzen dabei die gleichen Abmessungen wie beim Profilrahmen 1, wobei auch in den Parallelschenkeln 7 der Seitenabschlußwand 10 die Lochung nach dem gleichen Schema wie im Profilrahmen 1 vorhanden ist.

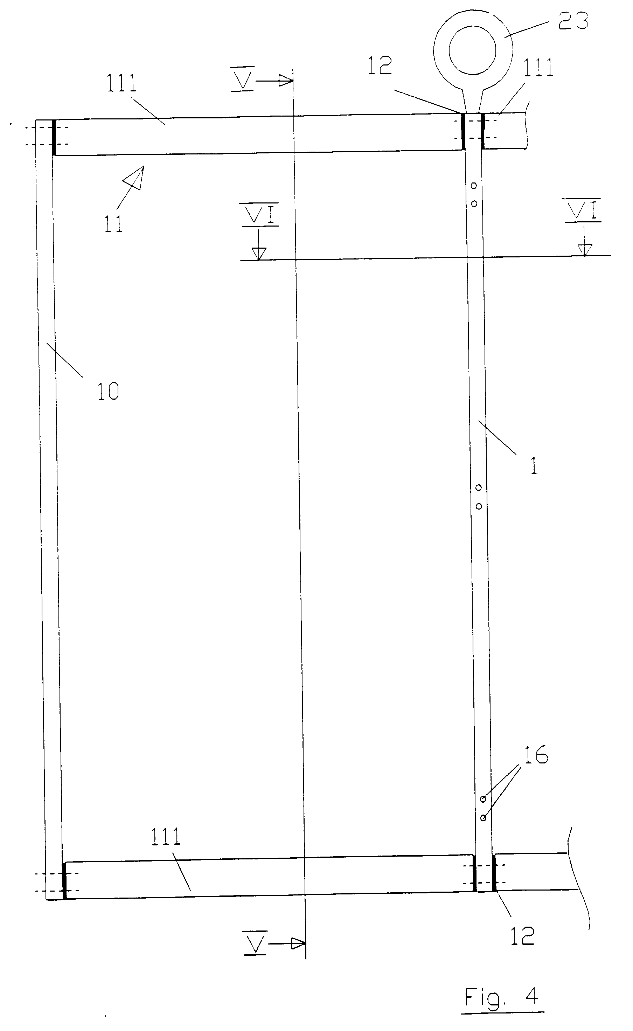

Mit den Profilrahmen 1 bzw. Seitenabschlußwänden 10 können durch oben und unten dazwischengesetzte Horizontalplatten 11 Korpusse für Schaltschränke geschaffen werden, wie in Fig. 4 dargestellt. Dabei sind die Abmessungen der Horizontalplatten 11 sowie der Profilrahmen 1 bzw. Seitenabschlußwände 10 so gewählt, daß ein einzelner Korpus eine bestimmte, genormte Breite besitzt.

Wenn aus diesen Bauteilen ein mehrteiliger Anreihschrank erstellt werden soll, so ist hierfür als senkrechtes Zwischenelement in konstruktiver Hinsicht jeweils nur ein Profilrahmen 1 notwendig. Dadurch erhält jedoch der Gesamtkorpus eine Breite, die nicht mehr ein exaktes ganzzahliges Vielfaches der Einzelbreite eines Einzelschrankes beträgt, jedoch aus optimal wenigen Einzelteilen aufgebaut werden kann.

Falls beim speziellen Anwendungsfall auch bei einem solchen Anreih-Schrank die vorgegebene normierte Breite jedes Schrankelementes eingehalten werden soll, so sind zwischen den miteinander fluchtenden Horizontalplatten jeweils nicht nur eine, sondern je zwei Profilrahmen 1 anzuordnen, so daß die Aneinanderreihung quasi aus mehreren Korpussen von Einzelschränken besteht.

Dabei ist zu erkennen, daß die Horizontalplatten einen vorderen und auch hinteren Rand besitzen, der so hoch ist, daß nicht nur an einer, sondern an zwei Löchern 2 eine mit Verschraubung in der Senkrechten mit den senkrechten Elementen, also dem Profilrahmen 1 bzw. der Seitenabschlußwand 10 möglich ist. Lediglich die Vorderund Hinterkanten 111 der Horizontalplatte 11 besitzen jedoch eine solche Höhe, während die hierzu im Winkel liegenden Seitenkanten eine Höhe entsprechend dem Parallelschenkel 7 des Profilrahmens 1 besitzt, um im Inneren des Schaltschrankes die volle Innenraumhöhe zur Nutzung zur Verfügung haben.

Zwischen die Seitenelemente sowie die Schraubverbindung mit den senkrecht stehenden Seitenteilen möglich ist. Zwischen die Seitenelemente, also Profilrahmen 1 bzw. Seitenabschlußwand 10, und die obere und untere Horizontalplatte 11 sind Dichtungen 12 eingesetzt, um die Dichtigkeit des Schaltschrankes zu gewährleisten. In der Oberseite des Profilrahmens 1 sind ferner Kran-Ösen 2₃ eingeschraubt, um den auch voll aufgerüsteten und bestückten Schaltschrank transportieren zu können. Diese Kran-Ösen können bei Bedarf entfernt und die entsprechenden Bohrungen durch nicht dargestellte Kunststoff-Stöpsel verschlossen werden. Gleiches gilt auch für die in der vorderen Stirnfläche in der Ansicht der Fig. 4 des Profilrahmens 1 angeordneten Scharnierbohrungen 16, an denen bei Bedarf Türen befestigt werden.

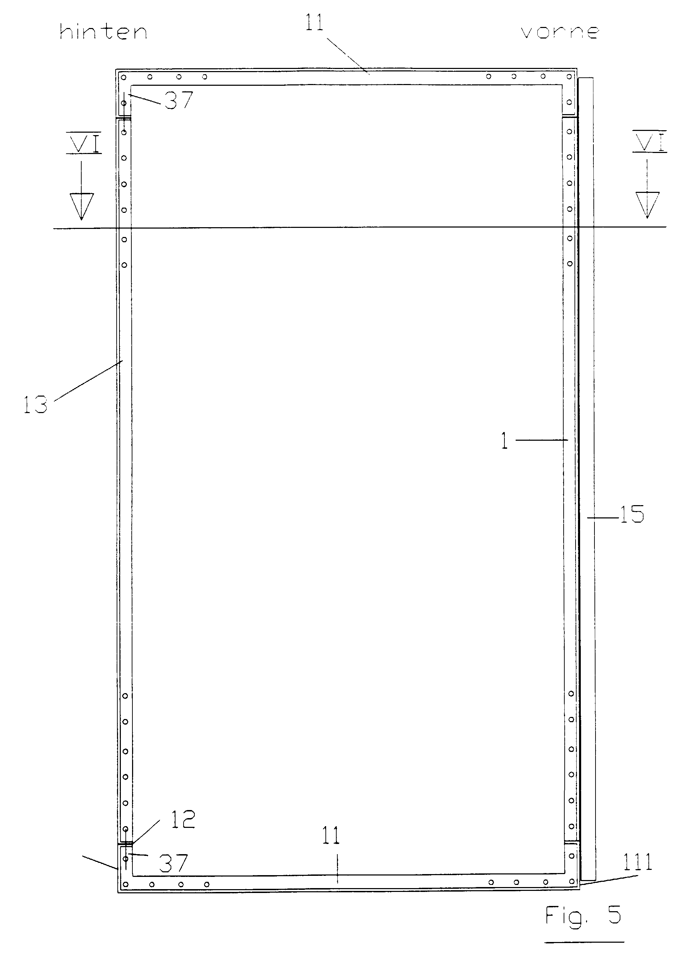

Der Schaltschrank der Fig. 4 ist in Fig. 5 in einer seitlichen Schnittdarstellung dargestellt. Dabei ist zu erkennen, daß die obere und untere Horizontalplatte 11 an der vorderen und hinteren Kante soweit in die Senkrechte gekröpft ist, daß in den dazu quer verlaufenden Parallelschenkeln 37 eine Verbindung über zwei Löcher 2 zu den davor und dahinterstehenden Profilrahmen 1 möglich ist. Dadurch ist die Stabilität des Korpus gegen Kräfte, die diesen aus dem rechten Winkel verziehen würden, wegen der größeren Berührungsfläche zwischen den Horizontalplatten 11 und den senkrechten Elementen wesentlich größer als bei Befestigung über nur ein Loch 2.

Zusätzlich ist in Fig. 5 zu erkennen, daß an den Hinterkanten, also in der linken Bildhälfte, zwischen die beiden Horizontalplatten 11 fluchtend eine als Wanne gebogene Rückwand 13 eingesetzt ist, mit umlaufender, zwischengelegter Dichtung 12. Durch beliebig viele entsprechende Verschraubungen in beliebiger Anzahlung durch die Löcher 2 mit den angrenzenden beiden Horizontalplatten 11 sowie den senkrechten Profilrahmen 1 bzw. Seiten-Abschlußwänden 10 versteift diese Rückwand 13 aufgrund ihres Einsetzens in einen vorhandenen Hohlraum den gesamten Korpus ganz erheblich.

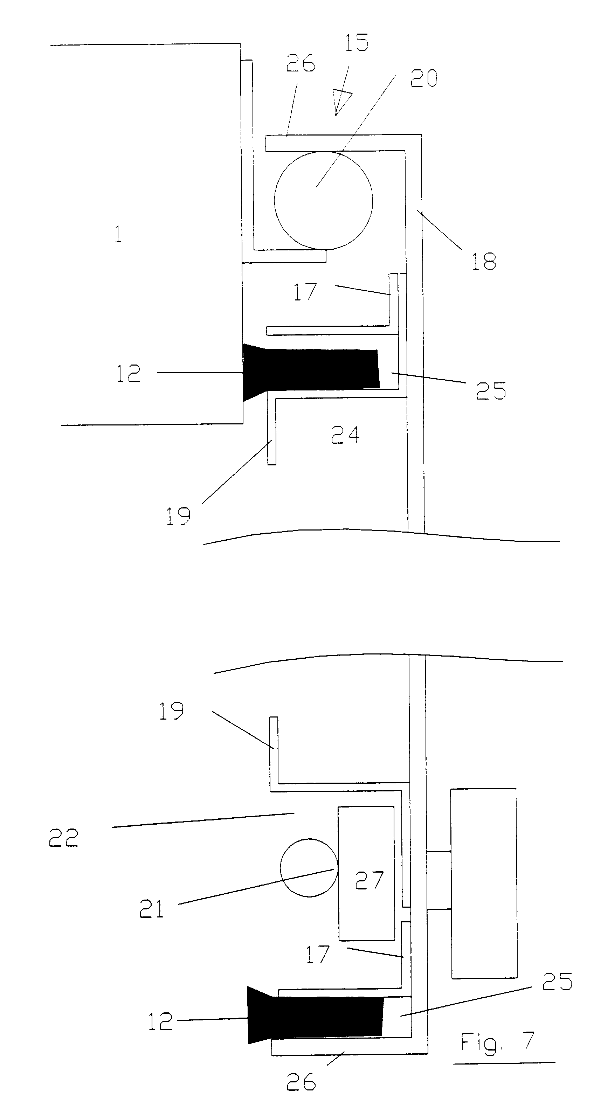

Ferner ist in Fig. 5 die auf der Vorderfront des Korpus anliegende Tür 15 zu erkennen, die in einem waagerechten Schnitt in Fig. 7 dargestellt ist.

Die Türe 15 besteht aus einer Wanne 18 mit umlaufendem Außenschenkel 26, die ebenfalls aus einem entsprechend ausgeklinkten Blech gebogen und an den Kanten verschweißt wird. Um eine umlaufende Dichtung 12 in der mit der offenen Seite dem Korpus des Schaltschrankes zugewandten Tür 15 unterzubringen, die noch im Bereich des Korpus an diesem anliegt, sind im Innenraum 24 der Türe 15 umlaufend L-Profile 17 angeordnet, die zu den Außenschenkeln 26 einen Abstand in Form eines Hohlraumes 25 bilden, in den die Dichtung 12 eingesetzt wird.

Auf der in Fig. 7 oben dargestellten Scharnierseite wird der Abstand nicht durch das L-Profil 17 und den Außenschenkel 26, sondern statt dessen durch ein zusätzliches Z-Profil 19 erzielt, die zusammen in ausreichendem Abstand von dem scharnierseitigen Außenschenkel 26 der Türe 15 angeordnet sind und dadurch in der Nähe dieses Außenschenkels 26 im Innenraum 24 ausreichend Platz für die Anordnung des Scharnieres 20 schaffen.

Das L-Profil 17 liegt dabei auf dem einen frei endenden Schenkel des Z-Profiles 19 und dieser wiederum auf der Innenfläche der Wanne 18, auf der sie gemeinsam befestigt werden.

Auf der Schloßseite in der unteren Bildhälfte der Fig. 7 ist innerhalb des L-Profiles 17 ebenfalls ein solches Z-Profil 19 in einem solchen Abstand zum schloßseitigen Außenschenkel 26 angeordnet, so daß in dem dazwischen entstehenden Freiraum 22 ausreichend Platz für die Unterbringung des Schließgestänges 21 und des Schlosses 27 verbleibt.

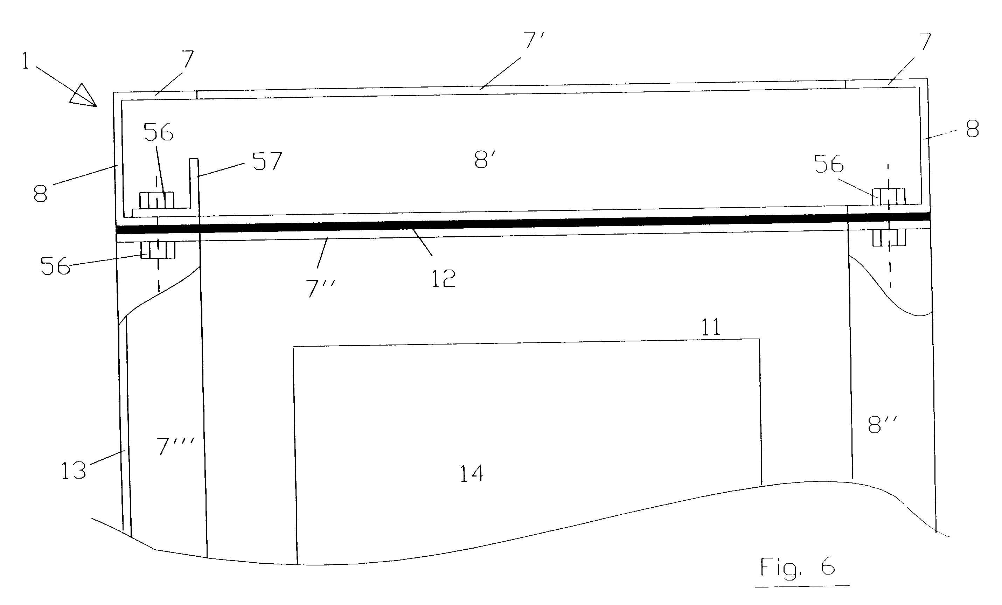

Fig. 6 zeigt ferner eine Schnittdarstellung in Blickrichtung VI-VI der Fig. 5, also einen vertikalen Schnitt durch die Seite eines Schaltschrankes. Dabei ist nochmals der Profilrahmen 1 als senkrecht stehendes Seitenelement zu erkennen und die damit mit zwischengelegter Dichtung 12 verschraubte untere Horizontalplatte 11, die in ihrer Mitte einen Durchbruch 14 als Kabeldurchlaß aufweist. Beide Teile sind über eine Schraubverbindung mit den Schrauben/Muttern 56 verschraubt, wobei wahlweise - sowohl innerhalb des zugänglichen Profilrahmens 1 als auch im Bereich der Horizontalplatte 11 Anbauteile wie etwa der dargestellte Befestigungswinkel 57 bei dieser Verschraubung mit befestigt werden können.

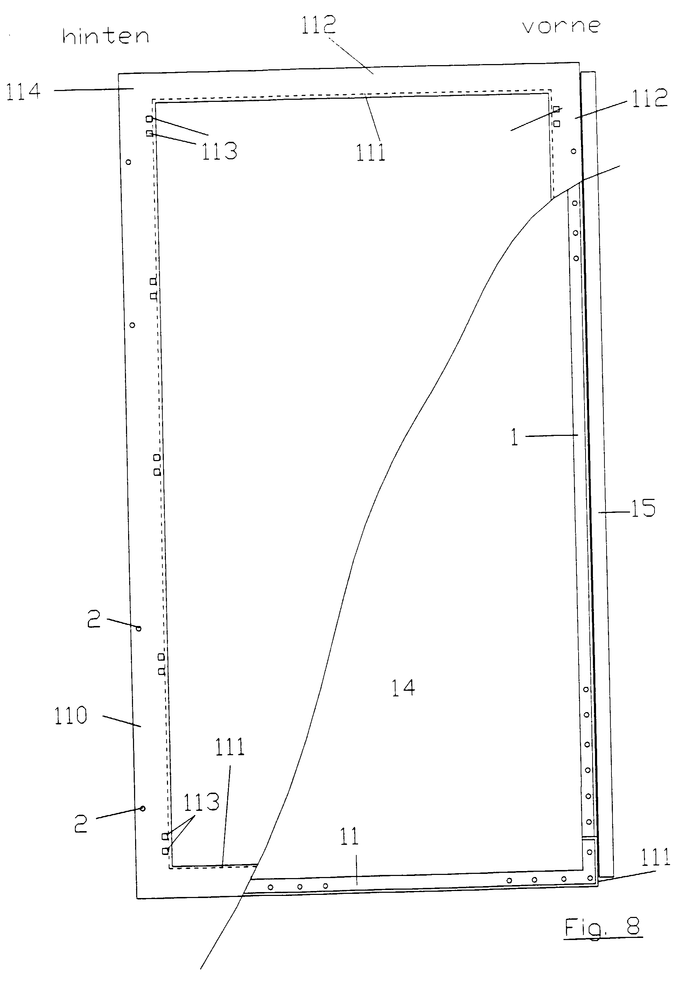

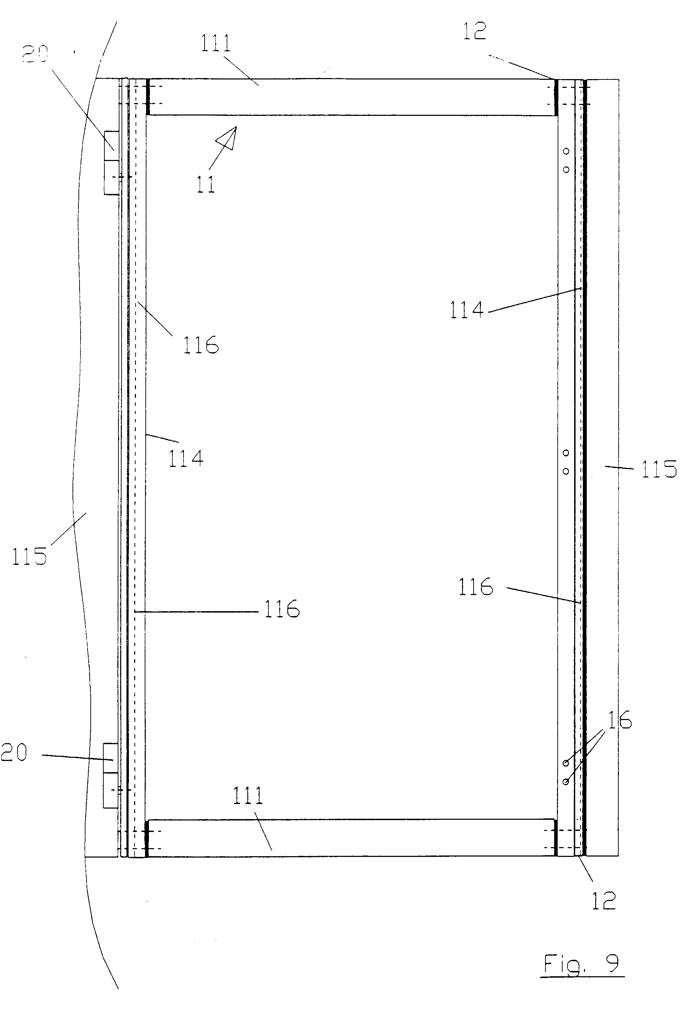

Weiterhin ist in den Figuren 8 und 9 in Seitenansicht bzw. Frontansicht die Befestigung von Seitentüren dargestellt, die anstelle einer festen Seitenwand auf einen zur Seite hin offenen Profilrahmen 1 aufgebracht werden können und dabei wird die Seitentür mittels Scharnieren nicht direkt am Profilrahmen 1 sondern einem zusätzlichen, auf dem Profilrahmen 1 aufgebrachten Blendrahmen 114 befestigt.

In Figur 8 ist ein Profilrahmen 1 mit aufgebrachtem Blendrahmen 114 in Teilschnittdarstellung, ähnlich der Figur 5, dargestellt.

Dabei ist zu erkennen, daß der Blendrahmen 114, der aus einem L-förmigen Blechprofil besteht und eine rechteckige Form mit innerem Hohlraum ähnlich den Profilrahmen aufweist, Außenabmessungen besitzt, die den Außenabmessungen des Profilrahmens 1 entsprechen bzw. um wenige Millimeter gegenüber dessen Außenkanten zurückstehen.

In den senkrechten Schenkeln 110 des Blendrahmens 114 sind mehrere Löcher 2 angeordnet, die sich bei auf dem Profilrahmen 1 aufgelegten Blendrahmen 114 mit den Löchern 2 der Lochreihen in dem Profilrahmen 1 decken.

Über diese Löcher 2 kann der Blendrahmen 114 auf einfache Art und Weise auch nachträglich auf dem Profilrahmen 1 aufgeschraubt werden.

Die Befestigung der Türscharniere 20 für die Seitentür 115 geschieht über vorzugsweise rechteckige und paarweise angeordnete Durchbrüche 113, die entsprechend vorgesehene Anzahl an Scharnieren 20 in beiden senkrechten Holmen 110 des Blendrahmens 114 angeordnet sind. Dadurch ist der Blendrahmen 114 seitensymmetrisch, so daß der gleiche Blendrahmen 114 sowohl für die linke als die rechte Seitenfläche eines Schaltschrankes verwendet werden kann.

Auch die Seitentür 115 kann dadurch - nach Drehung um 180 ° - auf beiden Seiten eines Schaltschrankes befestigt werden.

Die Durchbrüche 113 liegen dabei soweit innen im Blendrahmen, daß sie bei auf dem Profilrahmen 1 montierten Blendrahmen 114 innerhalb des mittigen Durchbruches 14 des Profilrahmens 1 liegen und deshalb die Verschraubung der Scharniere 20 in diesen Durchbrüchen 13 ohne Behinderung durch den Profilrahmen 1 auch nachträglich leicht vorgenommen werden kann.

Der Blendrahmen 114 besteht aus einem L-förmigen Profil, dessen langer Schenkel 114 in einer Ebene umlaufend auf den Seitenflächen des Profilrahmen 1 aufliegt, während der kurze Schenkel 116 in das inneren des Schaltschrankes und damit den Durchbruch 14 des Profilrahmens 1 hineingekröpft ist. Neben der Versteifungsfunktion wird dadurch auch die auf der Innenseite des Blendrahmens 114 liegende Verschraubung der Scharniere 20 abgedeckt, und dadurch die Verletzungsgefahr reduziert.

Figur 9 zeigt eine Aufsicht eines ein- oder mehrteiligen Schaltschrankes von vorne ähnlich der Figur 4. Dabei ist sowohl auf der linken als auch auf der rechten Seite eine Seitentür 115 angeordnet. Auf der linken Seite ist die Seitentür in der geöffneten Stellung gezeichnet. Die Verbindung mit dem Blendrahmen 114 über die Scharniere 20 ist erkennbar und ebenso das Hineinragen des kurzen Schenkels 116 des L-förmigen Profiles des Blendrahmens 114 in das innere des Profilrahmens 1.

Im Gegensatz dazu ist in der rechten Bildhälfte die Seitentür in geschlossenem Zustand dargestellt, in der sie - direkt oder über in der Anlagefläche der Seitentür 115 angeordnete Gummidichtungen etc. - auf der Außenfläche des Blendrahmens 114 aufliegt, der seinerseits wiederum auf der Außenfläche des Profilrahmens 1 aufliegt und mit diesem verschraubt ist.

## Patentansprüche

1. Schaltschrank mit einem Korpus, bestehend aus zwei mal zwei jeweils paarweise parallel angeordneten und miteinander verbundenen Elementen,
- wobei es sich bei den ersten beiden parallelen Teilen entweder um Profilrahmen (1) oder Seitenabschlußwände (10) handelt, wovon die Profilrahmen (1) aus einem nach innen offenen U-Profil bestehen, und
- Löcher (2) in den ersten beiden parallelen Teilen im gleichen Abstand zur Außenkante des Elementes angeordnet sind,
dadurch gekennzeichnet, daß
a) die Profilrahmen (1) oder Seitenabschlußwände (10) der ersten beiden parallelen Teile jeweils gleiche Außenabmessungen aufweisen,
b) zwei identische Platten zwischen die Enden der parallelen ersten Teile geschraubt sind, wobei
- die Profilrahmen (1) bzw. Seitenabschlußwände (10) jeweils aus einem Stück gefertigt sind,
- die Seitenabschlußwände (10) aus einer doppelt um jeweils 90° in die gleiche Richtung gefalzten Blechplatte bestehen, und
c) sowohl in den parallelen Schenkeln (7) des U-Profiles der Profilrahmen (1) bzw. dem zur Außenplatte (9) der Seitenabschlußwand (10) parallelen Schenkeln (7) Löcher (2) mit immer gleichem Abstand (r) zueinander so angeordnet sind, daß jeweils auch auf der Gehrung der Profilrahmen (1) bzw. der Seitenabschlußwände (10) Löcher (2) zu liegen kommen.

2. Schaltschrank nach Anspruch 1,
**dadurch gekennzeichnet, daß**
die Profilrahmen (1) bzw. Seitenabschlußwände (10) senkrecht angeordnet sind und die Seiten des Korpus bilden und die dazwischen gesetzten Platten Horizontalplatten (11) sind, die jeweils mit ihrer durchgehenden Fläche nach der Außenseite des Korpus hin montiert sind.

3. Schaltschrank nach einem der vorhergehenden Ansprüche,
**dadurch gekennzeichnet, daß**
das U-Profil (6) der Profilrahmen (1) aus einem fortlaufenden Stück U-Profil (6) besteht, welches an den Enden abgeschrägt und dazwischen dreimal um jeweils 90° in den parallelen Schenkeln (7) ausgespart wird, so daß durch Biegung des Querschenkels (8) an den ausgesparten Stellen um 90° ein rechteckiger Profilrahmen entsteht, in dem Anfang und Ende des U-Profiles (6) in der Ebene der Querschenkel (8) miteinander verschweißt werden und die gegenüberliegenden Gehrungen der Parallelschenkel (7) im Bereich zwischen dem auf der Gehrung liegenden Loch (2) und im Inneren des Profilrahmens (1) verschweißt werden.

4. Schaltschrank nach Anspruch 4,
**dadurch gekennzeichnet, daß**
die Gehrungen der Parallelschenkel durch eine durchgehende Schweißnaht (4) vom Inneren Ende des Umfanges des Loches (2) bis zum Inneren freien Ende der Parallelschenkel (7) verschweißt werden.

5. Schaltschrank nach Anspruch 3,
**dadurch gekennzeichnet, daß**
die sich gegenüberliegenden Gehrungen der Parallelschenkel (7) wenigstens durch einen Schweißpunkt (5) am Innenumfang des Loches (2) auf der Gehrung sowie einen Schweißpunkt (5) am inneren freien Ende der Parallelschenkel (7) miteinander verschweißt werden.

6. Schaltschrank nach einem der vorhergehenden Ansprüche,
**dadurch gekennzeichnet, daß**
zwischen den hinteren Enden der seitlichen Profilrahmen (1) bzw. Seitenabschlußwände (10) sowie der unteren und oberen Horizontalplatte (11) eine Rückwand (13) eingesetzt und mit diesen verschraubt wird, die nicht über die Hinterkante des Korpus hervorragt.

7. Schaltschrank nach einem der vorhergehenden Ansprüche,
**dadurch gekennzeichnet, daß**
die Horizontalplatten (11) an der Vorder- und Hinterkante doppelt um jeweils 90° in die gleiche Richtung nach innen gefalzt sind, so daß der dadurch entstehenden, zur Ebene der Horizontalplatte (11) senkrechte Schenkel (111) eine solche Höhe besitzt, daß sich in dessen Bereich jeweils zwei Löcher (2) der angrenzenden Seitenteile befinden und die beiden übrigen Kanten der Horizontalplatte (11) nur einfach bis auf die gleiche Höhe gefalzt und mit den Vorder- und Hinterkanten der Horizontalplatte (11) verschweißt sowie mit einer Reihe von Löchern (2) versehen sind.

8. Schaltschrank nach einem der vorhergehenden Ansprüche,
**dadurch gekennzeichnet, daß**
die Profilrahmen (1) bzw. Seitenabschlußwände (10) in den nach vorne und hinten ragenden Querschenkeln (8) Bohrungen (16) zum Befestigen von Türscharnieren aufweist.

9. Schaltschrank nach einem der vorhergehenden Ansprüche,
**dadurch gekennzeichnet, daß**
zwischen den Profilrahmen (1), Seitenabschlußwänden (10), Horizontalplatten (11) und ggfs. der Rückwand (13) durchgehende, bandförmige Dichtungen (12) aus elastischem Material eingelegt sind.

10. Schaltschrank nach einem der vorhergehenden Ansprüche,
**dadurch gekennzeichnet, daß**
in der Fläche der Horizontalplatten (11) eine Öffnung (14) zum Hindurchführen der Kabel oder Entlüften des Schaltschrankes angeordnet ist.

11. Schaltschrank nach einem der vorhergehenden Ansprüche,
**dadurch gekennzeichnet, daß**
die lichte Weite zwischen den Parallelschenkeln (7) an den Profilrahmen (1) so groß ist, daß an beiden Parallelschenkeln (7) angrenzende Bauteile verschraubt werden können.

12. Schaltschrank nach einem der vorhergehenden Ansprüche,
**dadurch gekennzeichnet, daß**
in den Oberseiten der Profilrahmen (1) bzw. Seitenabschlußwände (10) Bohrungen zum Befestigen von Kran-Ösen (23) angeordnet sind.

13. Schaltschrank nach einem der vorhergehenden Ansprüche,
**dadurch gekennzeichnet, daß**
eine Tür (15) auf den vorderen Flächen des Korpus teilweise aufliegt und an einer der Profilrahmen (1) bzw. Seitenabschlußwände (10) befestigt ist.

14. Schaltschrank nach Anspruch 13,
**dadurch gekennzeichnet, daß**
die Tür (15) im Bereich der Anlage am Korpus des Schaltschrankes eine umlaufende Dichtung (12) aufweist.

15. Schaltschrank nach Anspruch 13 oder 14,
**dadurch gekennzeichnet, daß**
die Tür aus einer aus einer Blechplatte gefalzten und verschweißten Wanne (18) besteht, die mit ihrem Innenraum zum Korpus hin weist und in deren Innenraum (24) umlaufend im Abstand zur Außenkante der Wanne (18) ein L-Profil (17) umläuft, welches nicht aus dem Innenraum (24) der Wanne (18) hervorragt und einen umlaufenden Hohlraum (25) im Innenraum (24) begrenzt, in dem die Dichtung (12) festsitzt, die etwas über den Innenraum (24) nach außen hervorragt.

16. Schaltschrank nach Anspruch 14 oder 15,
**dadurch gekennzeichnet, daß**
auf der Scharnierseite das L-Profil (17) in einem solchen Abstand zum Außenschenkel (26) der Wanne (18) der Tür (15) verläuft, daß zwischen dem Außenschenkel (26) und dem L-Profil (17) das Scharnier (20) mit der Tür (15) verbunden werden kann und an der Wanne (18) parallel zum L-Profil (17) ein Z-Profil (19) im Abstand so angeordnet ist, daß zwischen dem Querschenkel des Z-Profiles (19) und dem L-Profil (17) der Hohlraum (25) für die Dichtung (12) entsteht, wobei die Parallel zur Tür (15) verlaufenden Schenkel des L-Profiles (17) sowie des Z-Profiles (19) aufeinanderliegen und mit der Platte der Wanne (18) verschweißt sind.

17. Schaltschrank nach Anspruch 14, 15, oder 16,
**dadurch gekennzeichnet, daß**
auf der dem Scharnier gegenüberliegenden senkrechten Seite der Tür (15) innerhalb des L-Profiles (17) parallel dazu im Abstand ein Z-Profil (19) in einem solchen Abstand montiert ist, daß in dem dazwischen entstehenden Freiraum (22) das Schließgestänge (21) sowie ein zugehöriges Schloß (27) untergebracht werden können

18. Schaltschrank nach einem der vorhergehenden Ansprüche,
**dadurch gekennzeichnet, daß,**
der Schaltschrank einen rechteckig umlaufenden Blendrahmen (114) aufweist, dessen Außenabmessungen den Außenabmessungen der Profilrahmen (1) entspricht, dessen Rahmenbreite jedoch größer ist als die Rahmenbreite der Profilrahmen (1) und der über den Umfang verteilt mehrere Löcher (2) aufweist, die mit den Löchern (2) der Lochreihen der Profilrahmen (1) fluchten, sowie in beiden senkrechten Rahmenteilen innerhalb der inneren Öffnung der Profilrahmen (1) angeordnete Durchbrüche (113) zur Befestigung von Scharnieren (20) und das der Schaltschrank eine Seitentür (115) aufweist, die am Blendrahmen (114) angelenkt ist und auf diesem aufliegt.

19. Schaltschrank nach einem der vorherigen Ansprüche,
**dadurch gekennzeichnet, daß**
der Blendrahmen (114) bezüglich seiner senkrechten Mittellinie spiegelbildlich ausgebildet ist.

20. Schaltschrank nach einem der vorherigen Ansprüche,
**dadurch gekennzeichnet, daß**
die Seitentür (115) identisch mit den Türen (15) für die Vorderfront des Schaltschrankes ist und die Tiefe des Schaltschrankes so gewählt ist, daß durch eine der Vordertüren (15) die Seitenfläche des Schaltschrankes passgenau abgedeckt wird.

## Claims

1. A switch cabinet having a body comprising twice two elements which are respectively arranged in pairs in parallel relationship and connected together,
- wherein the first two parallel portions are either profile frames (1) or side closure walls (10) of which the profile frames (1) comprise an inwardly open U-shaped profile, and
- holes (2) are arranged in the first two parallel portions at equal spacings relative to the outside edge of the element,
characterised in that
a) the profile frames (1) or side closure walls (10) of the first two parallel portions each have respectively identical outside dimensions,
b) two identical plates are screwed between the ends of the parallel first portions, wherein
- the profile frames (1) or side closure walls (10) are each produced from one piece,
- the side closure walls (10) comprise a sheet metal plate which is doubly folded through 90° in each case in the same direction, and
c) holes (2) with always the same spacing (r) relative to each other are so arranged in the parallel limbs (7) of the U-shaped profile of the profile frames (10) or the limb (7) parallel to the outside plate (9) of the side closure wall (10), that holes (2) also come to lie respectively on the miter of the profile frames (1) or the side closure walls (10).

2. A switch cabinet according to claim 1 characterised in that the profile frames (1) or side closure walls (10) are arranged perpendicularly and form the sides of the body and the plates fitted therebetween are horizontal plates (11) which are each mounted with their continuous surface towards the outside of the body.

3. A switch cabinet according to one of the preceding claims characterised in that the U-shaped profile (6) of the profile frames (1) comprises a continuous portion of U-shaped profile (6 ) which is bevelled at the ends and which is cut-out therebetween three times through 90° in each case in the parallel limbs (7) so that bending the transverse limb (8) at the cut-out locations through 90° produces a rectangular profile frame in which the beginning and the end of the U-shaped profile (6) are welded together in the plane of the transverse limbs (8) and the oppositely disposed miters of the parallel limbs (7) are welded in the region between the hole (2) disposed on the miter and in the interior of the profile frame (1).

4. A switch cabinet according to claim 3 characterised in that the miters of the parallel limbs are welded by a continuous welded seam (4) from the inner end of the periphery of the hole (2) to the inner free end of the parallel limbs (7).

5. A switch cabinet according to claim 3 characterised in that the oppositely disposed miters of the parallel limbs (7) are welded together at least by a weld spot (5) at the inner periphery of the hole (2) on the miter and a weld spot (5) at the inner free end of the parallel limbs (7).

6. A switch cabinet according to one of the preceding claims characterised in that a rear wall (13) is inserted between the rear ends of the lateral profile frames (1) or side closure walls (10) and the lower and upper horizontal plates (11) and is screwed to same, which wall does not project beyond the rear edge of the body.

7. A switch cabinet according to one of the preceding claims characterised in that at the front and rear edges the horizontal plates (11) are doubly folded inwardly each through 90° in the same direction so that the resulting limb (111) which is perpendicular to the plane of the horizontal plate (11) is of such a height that two holes (2) of the respective adjoining side portions are disposed in the region of said limb and the other two edges of the horizontal plate (11) are only singly folded to the same height and are welded to the front and rear edges of the horizontal plate (11) and are provided with a row of holes (2).

8. A switch cabinet according to one of the preceding claims characterised in that the profile frames (1) or side closure walls (10) have in the forwardly and rearwardly projecting transverse limbs (8), bores (16) for fixing door hinges.

9. A switch cabinet according to one of the preceding claims characterised in that continuous strip-shaped seals (11) of elastic material are inserted between the profile frames (1), side closure walls (10), horizontal plates (11) and possibly the rear wall (13).

10. A switch cabinet according to one of the preceding claims characterised in that arranged in the surface of the horizontal plates (11) is an opening (14) for passing the cables therethrough or for ventilating the switch cabinet.

11. A switch cabinet according to one of the preceding claims characterised in that the internal width between the parallel limbs (7) on the profile frames (1) is so great that adjoining components can be screwed to both parallel limbs (7).

12. A switch cabinet according to one of the preceding claims characterised in that bores for fixing crane eyes (23) are arranged in the top sides of the profile frames (1) or side closure walls (10).

13. A switch cabinet according to one of the preceding claims characterised in that a door (15) partially lies on the front surfaces of the body and is fixed to one of the profile frames (1) or side closure walls (10).

14. A switch cabinet according to claim 13 characterised in that in the region of bearing against the body of the switch cabinet the door (15) has a seal (12) extending therearound.

15. A switch cabinet according to claim 13 or claim 14 characterised in that the door comprises a shell member (18) which is folded from a sheet metal plate and welded and which faces with its interior towards the body and in the interior (24) of which an L-profile (17) extends therearound at a spacing relative to the outer edge of the shell member (18), which L-profile (17) does not project from the interior (24) of the shell member (18) and defines a peripherally extending cavity (25) in the interior (24), in which the seal (12) is fixed, the seal projecting outwardly somewhat beyond the interior (24).

16. A switch cabinet according to claim 14 or claim 15 characterised in that on the hinge side the L-profile (17) extends at such a spacing from the outer limb (27) of the shell member (18) of the door (15) that the hinge (20) can be connected to the door (15) between the outer limb (26) and the L-profile (17), and a Z-profile (19) is arranged on the shell member (18) parallel to the L-profile (17) at a spacing so that the cavity (25) for the seal (12) is provided between the transverse limb of the Z-profile (19) and the L-profile (17), wherein the limbs, which extend parallel to the door (15), of the L-profile (17) and the Z-profile (19) lie against each other and are welded to the plate of the shell member (18).

17. A switch cabinet according to claim 14, claim 15 or claim 16 characterised in that a Z-profile (19) is mounted on the perpendicular side of the door (15) opposite to the hinge, within the L-profile (17) parallel thereto at a spacing such that the closing linkage (21) and an associated lock (27) can be disposed in the free space (22) therebetween.

18. A switch cabinet according to one of the preceding claims characterised in that the switch cabinet has a fixed frame (114) which extends therearound in a rectangular configuration and whose outside dimensions correspond to the outside dimensions of the profile frames (1) but whose frame width is greater than the frame width of the profile frames (1) and which, distributed over the periphery, has a plurality of holes (2) which align with the holes (2) of the row of holes of the profile frames (1), and openings (113) for fixing hinges (20), which are arranged in both perpendicular frame portions within the inner opening of the profile frames (1), and that the switch cabinet has a side door (115) which is pivoted to the fixed frame (114) and lies on same.

19. A switch cabinet according to one of the preceding claims characterised in that the fixed frame (114) is of mirror-image configuration relative to its perpendicular centre line.

20. A switch cabinet according to one of the preceding claims characterised in that the side door (115) is identical to the doors (15) for the front of the switch cabinet and the depth of the switch cabinet is so selected that the side surface of the switch cabinet is covered in accurately fitting relationship by one of the front doors (15).

## Revendications

1. Armoire de distribution avec un corps formé de deux fois deux éléments disposés en parallèle, par paire, et reliés entre eux,
- les premiers deux éléments en parallèle étant soit des cadres profilés (1), soit des parois latérales de fermeture (10), les cadres profilés (1) étant formés à partir d'un profilé en U, ouvert en direction de l'intérieur et
- des trous (2) étant disposés dans les premiers deux éléments parallèles, à distance constante du bord extérieur de l'élément,
caractérisée par le fait que
a) les cadres profilés (1) ou les parois latérales de fermeture (10) des premiers deux éléments parallèles ont des dimensions extérieures identiques,
b) deux plaques identiques sont vissées entre les extrémités des premiers éléments parallèles,
- les cadres profilés (1) ou les parois latérales de fermeture (10) étant fabriqués chaque fois d'une pièce,
- les parois latérales de fermeture (10) étant constituées d'une plaque de tôle pliée deux fois à 90° dans la même direction et
c) des trous (2) toujours espacés les uns des autres d'une distance (r) constante sont disposés dans les ailes (7) parallèles du profilé en U des cadres profilés (1) ou dans les ailes (7) parallèles à la plaque extérieure (9) de la paroi latérale de fermeture (10) de manière telle que des trous (2) soient également en regard avec la coupe biaise des cadres profilés (1) ou des parois latérales de fermeture (10).

2. Armoire de distribution selon la revendication 1, caractérisée par le fait que les cadres profilés (1) ou les parois latérales de fermeture (10) sont disposés verticalement et forment les côtés du corps et que les plaques placées entre ceux-ci sont des plaques horizontales (11) qui sont montées avec leur surface continue disposée côté extérieur du corps.

3. Armoire de distribution selon l'une des revendications précédentes, caractérisée par le fait que le profilé en U (6) des cadres profilés (1) est constitué d'un tronçon continu de profilé en U (6), dont les extrémités sont coupées en biais et qui porte entre celles-ci trois entailles de 90° dans les ailes parallèles, de manière à obtenir par pliage à 90° de l'aile transversale (8) au niveau des entailles, un cadre profilé rectangulaire, dans lequel le début et la fin du profilé en U (6) sont soudés l'un à l'autre dans le plan de l'aile transversale (8) et les parties biaises en vis-à-vis des ailes parallèles (7) sont soudées dans la région entre le trou (2) situé sur la coupe biaise et à l'intérieur du cadre profilé (1).

4. Armoire de distribution selon la revendication 3, caractérisée par le fait que les parties biaises des ailes parallèles sont soudées par un cordon de soudure (4) continu qui s'étend de l'extrémité intérieure de la circonférence du trou (2) jusqu'à l'extrémité libre intérieure des ailes parallèles (7).

5. Armoire de distribution selon la revendication 3, caractérisée par le fait que les parties biaises en vis-à-vis des ailes parallèles (7) sont soudées l'une à l'autre au moins par un point de soudure (5) sur le bord périphérique intérieur du trou (2) situé sur la coupe biaise et par un point de soudure (5) sur l'extrémité intérieure libre des ailes parallèles (7).

6. Armoire de distribution selon l'une des revendications précédentes , caractérisée par le fait qu'une paroi arrière (13) qui ne dépasse pas par rapport à l'arête arrière du corps est montée entre les extrémités arrière des cadres profilés (1) latéraux ou des parois latérales de fermeture (10) et des plaques horizontales (11) inférieure et supérieure et est vissée à ces éléments.

7. Armoire de distribution selon l'une des revendications précédentes, caractérisée par le fait que les plaques horizontales (11), au niveau de leur bord avant et de leur bord arrière, sont pliées deux fois à 90° dans la même direction vers l'intérieur de telle sorte que l'aile (111) perpendiculaire au plan de la plaque horizontale (11) ainsi formée, ait une hauteur telle que deux trous (2) des éléments latéraux voisins soient situées dans leur région, tandis que les autres bords de la plaque horizontale (11) sont pliés une seule fois à la même hauteur, sont soudés aux bords avant et arrière de la plaque horizontale (11) et sont pourvus d'une série de trous (2).

8. Armoire de distribution selon l'une des revendications précédentes, caractérisée par le fait que les cadres profilés (1) ou les parois latérales de fermeture (10) sont pourvus, dans les ailes transversales (8) faisant saillie vers l'avant et vers l'arrière, de trous (16) pour la fixation de charnières de porte.

9. Armoire de distribution selon l'une des revendications précédentes, caractérisée par le fait que des joints (12) continus, en bandes, en matériau élastique sont placés entre les cadres profilés (1), les parois latérales de fermeture (10), les plaque horizontales (11) et le cas échéant la paroi arrière (13).

10. Armoire de distribution selon l'une des revendications précédentes , caractérisée par le fait qu'une ouverture (14) est prévue dans la surface des plaques horizontales (11) pour le passage des câbles ou la ventilation de l'armoire de distribution.

11. Armoire de distribution selon l'une des revendications précédentes, caractérisée par le fait que l'espace libre entre les ailes parallèles (7) des cadres profilés (1) est tel que des éléments voisins peuvent être vissés sur les deux ailes parallèles (7).

12. Armoire de distribution selon l'une des revendications précédentes, caractérisée par le fait que des trous pour la fixation d'anneaux de levage (23) sont disposés dans les faces supérieures des cadres profilés (1) ou des parois latérales de fermeture (10).

13. Armoire de distribution selon l'une des revendications précédentes, caractérisée par le fait qu'une porte (15) repose partiellement sur les surfaces avant du corps et est fixée sur l'un des cadres profilés (1) ou l'une des parois latérales de fermeture (10).

14. Armoire de distribution selon la revendication 13 , caractérisée par le fait que la porte (15) comporte un joint périphérique dans la région de son appui sur le corps de l'armoire de distribution.

15. Armoire de distribution selon la revendication 13 ou 14, caractérisée par le fait que la porte est formée d'un bac (18) obtenu par pliage à partir d'une plaque de tôle et soudage, dont la chambre intérieure est tournée vers le corps et contient un profilé en L (17) continu, disposé à distance du bord extérieur du bac (18) qui ne fait pas saillie dans la chambre intérieure (24) du bac (18) et définit une cavité (25) périphérique dans laquelle est monté le joint (12) qui dépasse faiblement en direction de l'extérieur hors de la chambre intérieure (24).

16. Armoire de distribution selon la revendication 14 ou 15, caractérisée par le fait que côté charnières le profilé en L (17) s'étend à une distance de l'aile extérieure (26) du bac (18) de la porte (15) telle, que la charnière (20) puisse être fixée à la porte (15) entre l'aile extérieure (26) et le profilé en L (17) et par le fait qu'un profilé en Z (19) est disposé sur le bac (18), parallèlement au profilé en L (17), à une distance telle que la cavité (25) pour le joint (12) soit formée entre l'aile transversale du profilé en Z (19) et le profilé en L (17), les ailes parallèles à la porte (15) du profilé en L (17) et du profilé en Z (19) reposant l'une sur l'autre et étant soudées au panneau du bac (18).

17. Armoire de distribution selon la revendication 14, 15 ou 16, caractérisée par le fait qu'un profilé en Z (19) est monté sur le côté de la porte (15) opposé aux charnières, à l'intérieur du profilé en L (17), parallèlement et à distance de celui-ci et que la tringlerie de fermeture (21) et une serrure (27) associée sont montées dans l'espace libre (22) ainsi ménagé.

18. Armoire de distribution selon l'une des revendications précédentes, caractérisée par le fait que l'armoire de distribution comporte un cadre de recouvrement (114) dont les dimensions extérieures correspondent aux dimensions extérieures des cadres profilés (1) mais dont la largeur est supérieure à la largeur du cadre profilé (1) et qui présente, répartis sur le pourtour, plusieurs trous (2) alignés avec les trous (2) de la série de trous du cadre profilé (1) et, dans les parties de cadre verticales, dans l'ouverture intérieure des cadres profilés (1), des passages (113) pour la fixation des charnières (20) et par le fait que l'armoire de distribution comporte une porte (115) latérale qui est articulée sur le cadre de recouvrement (114) et est appliquée contre celui-ci.

19. Armoire de distribution selon l'une des revendications précédentes, caractérisée par le fait que le cadre de recouvrement (114) est symétrique par rapport à son axe médian vertical.

20. Armoire de distribution selon l'une des revendications précédentes, caractérisée par le fait que la porte latérale (115) est identique aux portes (15) pour la face frontale de l'armoire de distribution et que la profondeur de l'armoire de distribution est choisie de telle sorte que la surface latérale de l'armoire de distribution soit recouverte exactement par l'une des portes avant (15).
